# FASCICULE DE BREVET EUROPEEN

(11) **EP 0 483 030 B1**
(45) Date de publication et mention de la délivrance du brevet: **29.03.1995**
(21) Numéro de dépôt: 91420377.3
(22) Date de dépôt: 23.10.1991
(51) Int. Cl.: B63B 7/04, B60P 3/10

(54) **Remorque à bagages transformable en embarcation**
Gepäckanhänger, umwandelbar in ein Boot
Luggage trailer convertible into a boat

(30) Priorité: 24.10.1990 FR 9013420; 21.05.1991 FR 9106616
(43) Date de publication de la demande: 29.04.1992
(73) Titulaire: ETABLISSEMENTS J. GAILLON, F-69830 St. Georges de Reneins (FR)
(72) Inventeur: Dupoyet, Guy, F-69740 Genas (FR)
(74) Mandataire: Maureau, Philippe

(56) Documents cités:
- EP-A- 0 241 399
- EP-A- 0 392 436
- DE-A- 3 209 646
- DE-A- 3 411 381
- US-A- 4 522 145
- US-A- 4 790 256

## Description

La présente invention concerne une remorque à bagages transformable en embarcation, comprenant une caisse et un couvercle adaptable sur elle pour sa fermeture, qui sont conformés de manière à pouvoir être assemblés dans le prolongement l'un de l'autre pour constituer la coque d'une embarcation.

La caisse et le couvercle sont généralement articulés l'un à l'autre par une charnière reliant le bord supérieur de leurs parois avant, arrière ou latérales, et assemblable dans le prolongement l'une de l'autre au moyen d'organes d'accrochage appropriés. Ces organes d'accrochage peuvent être constitués soit par des boulons, des verrous ou des attaches rapides, qui traversent leurs parois arrière ou sont fixés à leur fond à proximité desdites parois arrière, soit par des broches de verrouillage traversant des alésages venant en alignement coaxial dans cette position du couvercle et de la caisse, ces alésages étant ménagés dans des saillies complémentaires que comprennent lesdites faces arrière.

Ces organes d'accrochage, de par leur position proche de l'axe d'articulation de la caisse et du couvercle, peuvent être soumis à des forces d'arrachement importantes lorsque les vagues soulèvent les extrémités de l'embarcation, pouvant conduire à leur rupture ou à un déchirement des parois de l'embarcation. Ceci peut d'autant plus se produire que ces efforts s'exercent ponctuellement et que, dans un souci de légèreté, lesdites parois n'ont qu'une résistance relative. Ainsi, des voies d'eau importantes peuvent être générées dans l'embarcation.

Ces organes d'accrochage, de toute façon, présentent l'inconvénient de nécessiter de percer les parois de la caisse et du couvercle pour pouvoir être fixés et, donc, d'impliquer la réalisation d'une étanchéité adaptée.

Par ailleurs, les embarcations ainsi obtenues présentent l'inconvénient d'avoir une stabilité toute relative et un plat-bord généralement étroit et peu confortable pour s'y asseoir.

Le DE-A-3 411 381 décrit des barres longitudinales permettant d'assembler la caisse et le couvercle d'une remorque dans le prolongement l'un de l'autre pour constituer une embarcation. Ces barres présentent l'inconvénient d'être encombrantes, de ne pas être intégrées à la remorque et de ne pas permettre une rigidification parfaite de l'embarcation. L'assemblage est peu rapide et pratique à réaliser.

La présente invention vise à remédier à ces inconvénients.

A cette fin, la remorque qu'elle concerne comprend au moins une poutre longitudinale constituée par au moins deux éléments téléscopiques, dont celui extérieur est fixé sur la face extérieure d'une paroi soit de la caisse, soit du couvercle, et dont au moins un de ceux intérieurs est destiné, lors de son déplacement, à être engagé dans un logement ajusté à ses dimensions prévues respectivement soit dans le couvercle, soit dans la caisse.

Cette ou ces poutres permettent de parfaitement assurer l'assemblage de la caisse et du couvercle dans leur position permettant de constituer l'embarcation et de parfaitement rigidifier l'embarcation ainsi obtenue, cet assemblage étant, en outre, simple et rapide à réaliser.

Selon une forme préférée de réalisation de l'invention, la remorque comprend deux poutres latérales dont les éléments extérieurs sont fixés à des retours que forment les bords latéraux supérieurs de la caisse et dont les éléments intérieurs coulissants sont destinés à être engagés dans des goulottes délimitées par des retours similaires que forment les bords latéraux d'ouverture du couvercle. Ces retours participent à la rigidité longitudinale de l'embarcation et leurs faces supérieures constituent des surfaces sur lesquelles on peut s'asseoir. Ils lui donnent un aspect sécurisant et permettent de dissimuler le passage de fils électriques, par exemple de feux de nuit. Les poutres constituent également des éléments de stabilisation latérale et de flottabilité dans la mesure où leur élément intérieur est fermé ou rempli de matériau de faible densité, tel qu'une mousse de polyuréthane expansé. Sinon, ces éléments servent de rangement à des accessoires divers.

En outre, lorsque la charnière permet le désassemblage du couvercle et de la caisse, le couvercle est avantageusement prévu de manière à pouvoir être adapté sur une galerie d'automobile. Grâce à lui, la voiture conserve un profil aérodynamique malgré le transport de bagages sur le toit et les goulottes qu'il comprend permettent le transport facile d'objets longilignes, tels que des skis, des cannes à pêche ou autres.

Des moyens complémentaires de fixation du couvercle en alignement de la caisse peuvent être prévus, à savoir :
- au moins une attache rapide du type "à genouillère" ;
- un banc transversal dont les montants comprennent une fente leur permettant d'être engagés à cheval sur les parois arrière contiguës de la caisse et du couvercle.

De toute façon, l'invention sera bien comprise à l'aide de la description qui suit, en référence au dessin schématique annexé représentant, à titre d'exemples non limitatifs, deux formes de réalisation préférées de la remorque qu'elle concerne.
Figures 1 et 2 en sont des vues de profil dans deux positions d'utilisation différentes, selon une première forme de réalisation ;
Figure 3 en est une vue éclatée de face et en coupe selon III-III de figure 2 ;
Figure 4 est une vue de dessus de sa partie arrière ;
Figure 5 en est une vue de détail en coupe longitudinale ;
Figure 6 en est une vue en perspective éclatée, selon une deuxième forme de réalisation ;
Figure 7 en est une vue en coupe transversale montée ;
Figure 8 en est une vue de détail à échelle agrandie ;
Figure 9 est une vue en perspective de l'un de ses sous-ensembles ; et
Figure 10 est une vue en perspective d'une utilisation particulière de l'un de ses éléments.

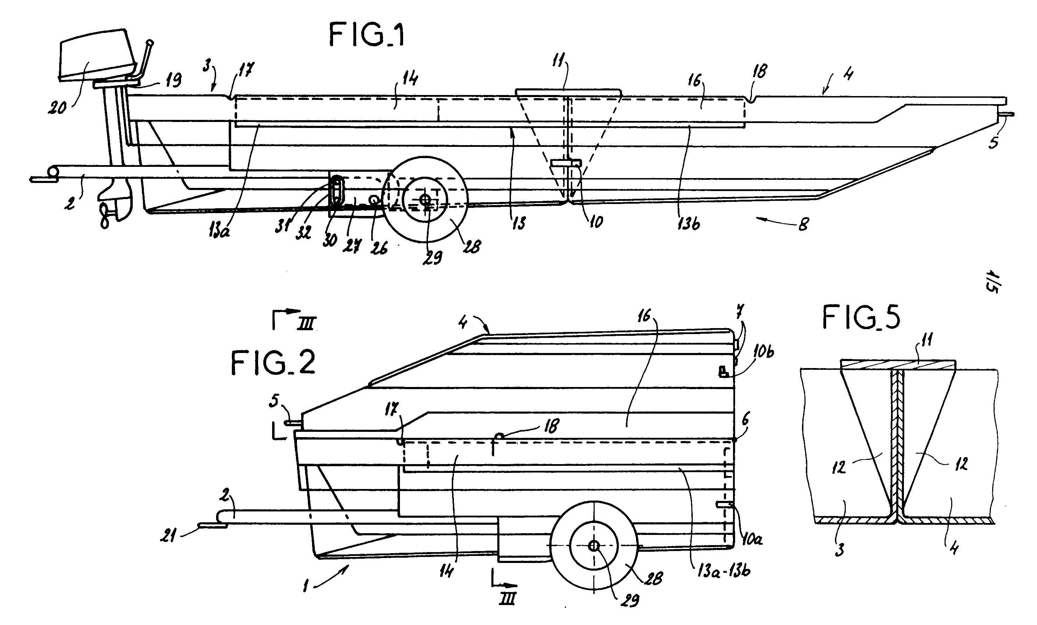

La figure 2 représente une remorque 1 attelable à un véhicule grâce à son timon 2. La remorque 1 comprend une caisse 3 pouvant contenir notamment des bagages et un couvercle 4 pour sa fermeture muni d'une poignée 5.

Le couvercle 4 est articulé au bord arrière supérieur de la caisse 3 par une charnière 6 permettant son pivotement par rapport à celle-ci sur au moins 180 degrés ainsi que son désassemblage d'avec elle.

Les feux arrière ainsi que la plaque mminéralogique de la remorque 1 sont encastrés dans la paroi de la caisse 3 de sorte que cette paroi présente une surface plane et lisse. La paroi arrière du couvercle 4 présente également une surface plane et lisse, si ce n'est qu'elle comporte des tampons 7 en matière déformable.

Comme cela apparaît par comparaison des figures 1 et 2, le couvercle 4, dont la partie avant est profilée de manière à être hydrodynamique, vient dans le prolongement de la caisse 3 en position pivotée à 180 degrés pour constituer avec elle, de manière particulièrement simple, facile et rapide, la coque d'une embarcation 8. Les faces arrière du couvercle 4 et de la caisse 3 peuvent avoir un profil complémentaire permettant leur encastrement dans cette position.

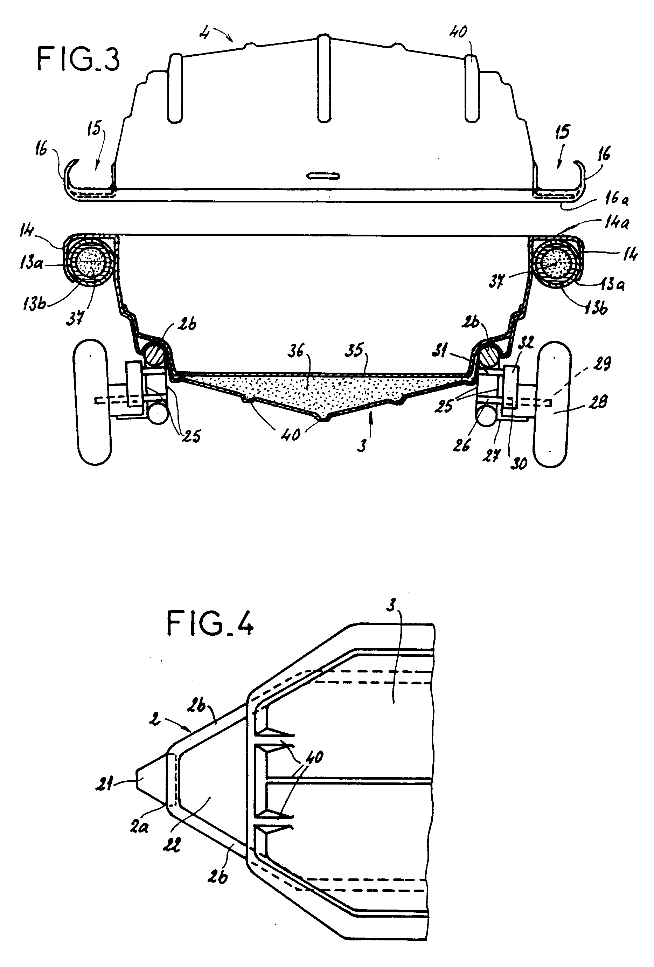

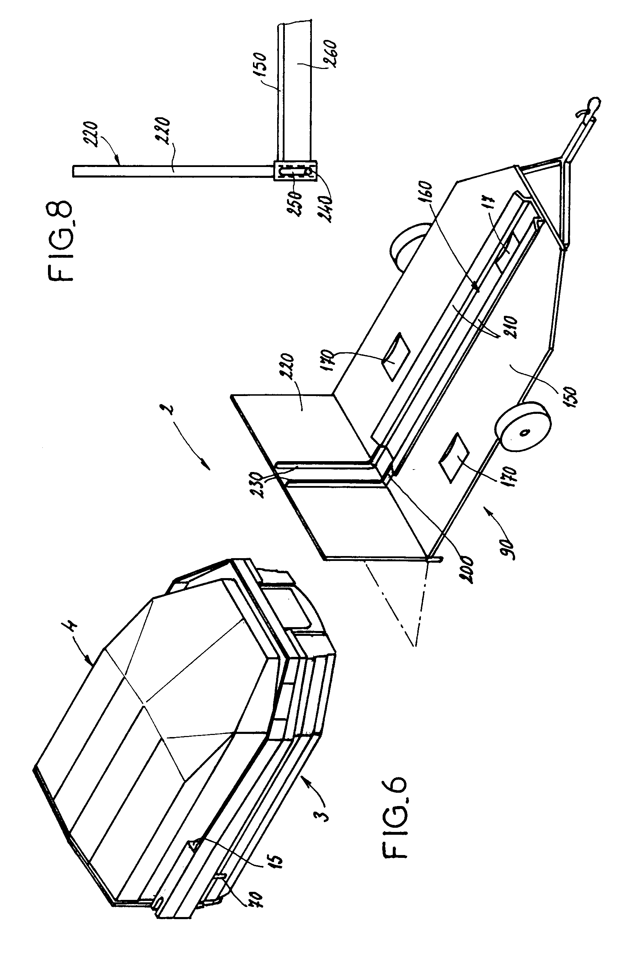

Pour fixer le couvercle 4 et la caisse 3 dans cette position, la remorque 1 comprend :
- deux attaches rapides 10 du type "à genouillère" dont le corps 10a de chacune en forme de crochet, est fixé à la partie inférieure des parois latérales de la caisse 3 et dont l'anneau 10b est fixé au couvercle 4 ;
- un banc transversal 11 représenté par la figure 5, dont les montants 12 comprennent une fente leur permettant d'être engagés à cheval sur les parois arrière de la caisse 3 et du couvercle 4 ;
- deux poutres longitudinales latérales 13 constituées chacune par deux éléments télescopiques 13a et 13b. La figure 3 montre que celui 13a extérieur est fixé à un retour 14 que forme chaque bord latéral supérieur de la caisse 3 et qui l'enveloppe partiellement tandis que l'élément mobile 13b, engagé dans l'élément 13a, est destiné, lors de son déplacement, à être engagé dans une goulotte 15 ajustée à ses dimensions délimitée par un retour 16, similaire au retour 14, que forme chaque bord latéral d'ouverture du couvercle 4. Le déplacement des éléments peut être facilité grâce à des poignées 70 visibles sur les figures 6,7 et 9. Sur ces mêmes figures, il apparaît également que les retours peuvent être fermés en partie arrière.

Des butées 17 et 18, comportées respectivement par la caisse 3 et le couvercle 4, sont prévues pour limiter le coulissement des éléments 13b.

De plus, le retour 16 s'accentue vers l'avant de l'embarcation, de sorte que la section transversale de la goulotte 15 diminue afin de réaliser un coincement de l'élément 13b en fin de course déployée de celui-ci.

Ce dernier est également rempli de mousse 37 de polyuréthane expansée, de manière à constituer une réserve de flottabilité.

Les parois horizontales 14a et 16a des retours 14 et 16 constituent des surfaces sur lesquelles on peut s'asseoir et donnent à l'embarcation un aspect sécurisant.

Par ailleurs, la paroi avant de la caisse 3 forme une chaise 19 sur laquelle peut être monté un moteur dit "hors-bord" 20.

La figure 4 montre que le timon 2 a une forme générale en U dont la partie centrale 2a, qui porte le crochet d'attelage sur une platine 21 et dont les branches 2b, qui sont fixées aux parois latérales de la caisse 3, délimitent entre elles, ainsi qu'avec la face avant de la caisse 3, une ouverture 22 dont les dimensions permettent le passage à travers elle de l'hélice et de l'arbre du moteur 20.

Le timon 2 forme ainsi un pare-chocs de protection de ce dernier.

En outre, il apparaît sur les figures 1 et 3 que les extrémités libres des branches 2b sont recourbées à 180 degrés vers le bas et que leur partie recourbée est décalée des parois latérales de la caisse 3. Chaque extrémité libre des branches 2b porte deux platines latérales 25 fixées sur elle, munies d'un axe 26 en saillie perpendiculaire vers l'extérieur autour duquel est monté un bras pivotant 27 constitué par une cornière, ce bras 27 portant à une extrémité la roue 28 sur un axe 29 et à l'autre extrémité un axe 30 engagé, de même qu'un axe 31 qui lui est parallèle porté par les platines 25, à l'intérieur d'un anneau 32 en matière élastique.

Chaque branche 2b joue le rôle d'une barre de torsion et chaque anneau élastique 32 celui d'un amortisseur des mouvements du bras 27.

Le système amortisseur de la remorque est ainsi constitué de manière très simple et les roues 28 qui restent à poste lors de l'utilisation de l'embarcation participent à la flottabilité de celle-ci.

La figure 3 montre que la caisse 3 comporte un plancher 35 rapporté dans son fond, ce plancher et ce fond délimitant entre eux un espace rempli de mousse 36 de polyuréthane expansée à cellules fermées dont le volume augmente à l'arrière de l'embarcation, de manière, en cas de voie d'eau, à compenser le poids du moteur 20 pour maintenir l'assiette de l'embarcation 8.

Le couvercle 4 et la caisse 3 comprennent une pluralité de nervures 40 de rigidification moulées avec eux. Toutes les nervures 40 qu'ils comprennent n'ont pas été représentées par souci de clarté des figures, et notamment sur la figure 3 des membrures de rigidification de la caisse 3.

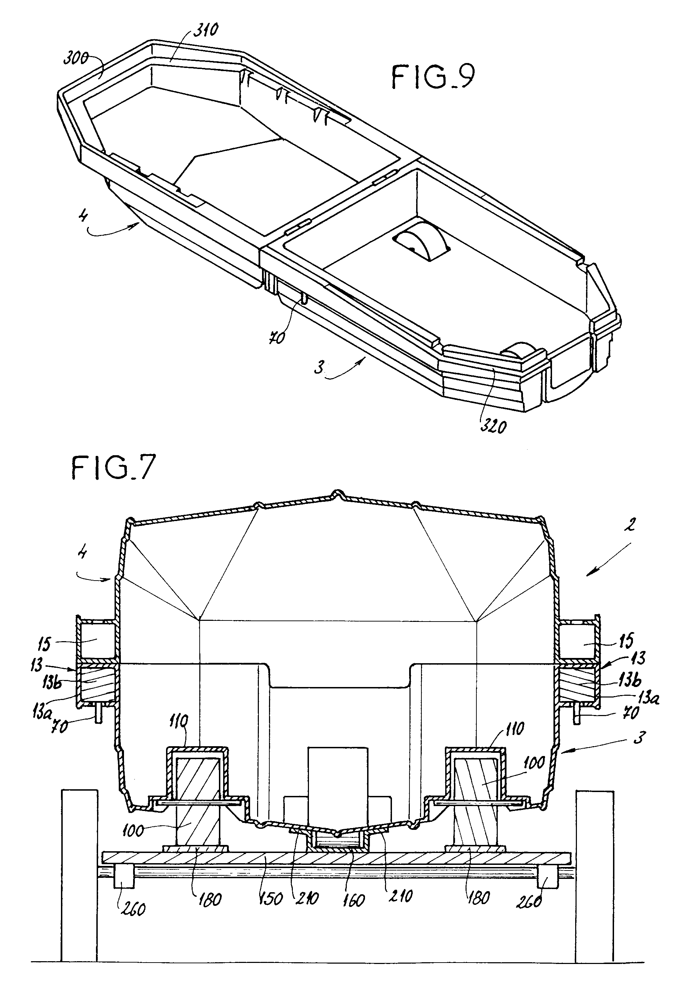

Les figures 6 et 7 représentent, sous différents angles, une remorque à bagages attelable 2, selon une deuxième forme de réalisation. Les éléments identiques ou similaires à ceux précédemment décrits et qui se retrouvent dans cette deuxième forme de réalisation sont désignés par les mêmes références.

Dans cette forme de réalisation, l'ensemble caisse 3-couvercle 4 peut être désolidarisé du châssis 90 de la remorque 2.

Le fond de la caisse 3 est muni de trois roues 100, qui sont encastrées en lui grâce à des logements 110 moulés avec la caisse 3. L'une des roues 100 est sur l'avant de la caisse 3 et située sur l'axe longitudinal de celle-ci, les deux autres roues étant situées sur l'arrière.

Le châssis 90 comprend une plaque 150, sur laquelle est fixée une piste centrale 160 pour le guidage de la roue avant 100 et dans laquelle sont ménagés trois évidements 170 destinés à recevoir les roues 100 lorsque la caisse 3 est en place sur le châssis 90. Ces évidements 170 pourraient être remplacés par des lumières traversant la plaque 150 dans laquelle basculeraient les roues 100 ou par des cales telles que désignées en 180 sur la figure 7.

Les guides 200, qui délimitent la piste 160 sont prolongés par des rebords inclinés 210, dont l'inclinaison correspond à celle des parois du fond de la caisse 3 et qui sont destinés à constituer des surfaces d'appui de l'ensemble caisse 3-couvercle 4 lorsque les roues 100 sont engagées dans les évidements 170.

Bien entendu, des moyens d'amarrage de l'ensemble caisse 3-couvercle 4 sur le châssis 90 sont prévus, tels que des attaches rapides, sangles ou autres.

En outre, le châssis 90 comprend à l'arrière une plaque 220 basculante pouvant constituer un plan incliné pour la mise à l'eau de l'embarcation, cette plaque 220 comportant des guides 230 prolongeant la piste 160. Comme cela apparaît sur la figure 8, les bords latéraux 220a de la plaque 220 comprennent deux tourillons coaxiaux 240 engagés et pouvant coulisser et pivoter dans des lumières 250 ménagées à l'arrière des longerons 260 du châssis 90 qui portent l'essieu de la remorque 2. La plaque 220 est en appui contre l'extrémité des longerons 260 dans sa position représentée par la figure 8 et ne peut basculer. Pour pouvoir la basculer, il convient de la soulever pour amener les tourillons 240 dans l'extrémité supérieures des lumières 250 et dégager ainsi son extrémité inférieure de derrière les extrémités des longerons 260.

Un système de verrouillage de la plaque 220 dans sa position représentée par la figure 8 peut être prévu, tel qu'un système à ressorts de rappel des tourillons 240 dans la partie inférieure des lumières 250. En outre, le plan incliné peut être constitué par plusieurs plaques articulées les unes aux autres et pouvant être fixées en alignement les unes des autres, ce qui permet d'augmenter sa longueur et de diminuer son inclinaison.

Par ailleurs, il apparaît sur la figure 9 que le couvercle 4 comprend, sur sa partie avant, une paroi périphérique 300, faisant saillie verticalement et délimitant un replat incliné 310, ladite paroi 300 et ledit replat 310 venant recouvrir et s'emboîter sur le bord de la caisse 3, qui forme un replat 320 complémentaire.

Tant dans l'une que dans l'autre des formes de réalisation de l'invention représentées au dessin, lorsqu'il est désassemblé d'avec la caisse 3, le couvercle 4 peut être monté sur une galerie d'automobile, sur un bac ou sur des barres de support fixés à son toit et constituer ainsi une protection pour les objets transportés ayant un profil aérodynamique. Les goulottes servent alors au transport d'objets longilignes tels que des skis, cannes à pêche ou autres.

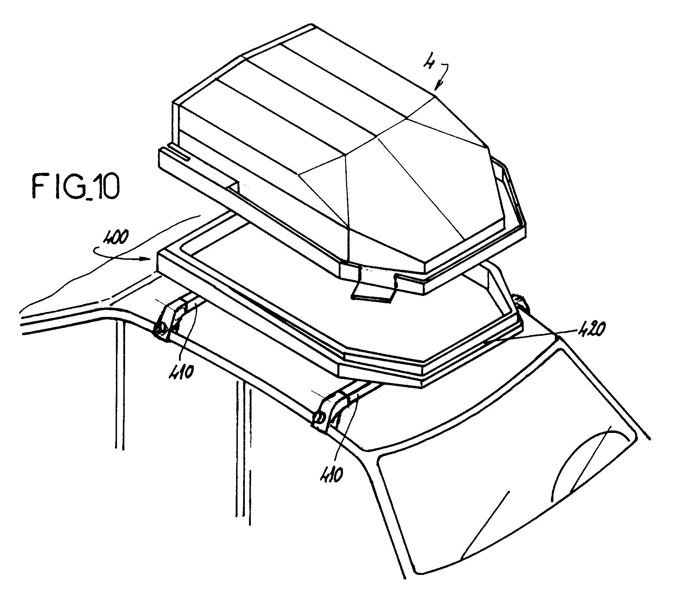

La figure 10 montre qu'une embase 400 est prévue à cet effet, cette embase 400 pouvant être fixée à des barres 410 et reproduisant la partie supérieure de la caisse 3, c'est-à-dire comportant des charnières pour le montage du couvercle 4 sur elle et un replat 420 identique au replat 320 précité.

Le bac ou embase 400 peut avantageusement être encastré sur la barre 410 de support la plus proche de l'avant du véhicule, de manière à ce que le couvercle 4 plonge légèrement en direction de l'avant du véhicule, pour un meilleur profil aérodynamique et un léger appui de l'air sur lui, assurant son maintien en position fermée en toute circonstance.

Les retours 14 peuvent en outre comprendre des volets pivotants permettant leur ouverture, de telle sorte que les objets longilignes précités puissent dépasser au travers de ces ouvertures.

## Revendications

1. Remorque à bagages attelable, du type comportant une caisse et un couvercle conformés de manière à pouvoir être assemblés dans le prolongement l'un de l'autre au moyen d'éléments longitudinaux coulissants pour constituer la coque d'une embarcation (8), caractérisée en ce que ces éléments sont constitués par au moins une poutre longitudinale (13) constituée par au moins deux éléments télescopiques (13a,13b), dont celui extérieur (13a) est fixé sur la face extérieure d'une paroi soit de la caisse (3), soit du couvercle (4), et dont au moins un de ceux intérieurs (13b) est destiné, lors de son déplacement, à être engagé dans un logement (15) ajusté à ses dimensions prévu respectivement soit dans le couvercle (4), soit dans la caisse (3).

2. Remorque selon la revendication 1, caractérisée en ce qu'elle comprend deux poutres latérales (13) dont les éléments extérieurs (13a) sont fixés à des retours (14) que forment les bords latéraux supérieurs de la caisse (3) et dont les éléments intérieurs coulissants (13b) sont destinés à être engagés dans des goulottes (15) délimitées par des retours (16) similaires que forment les bords latéraux d'ouverture du couvercle (4).

3. Remorque selon la revendication 1, caractérisée en ce que l'élément intérieur (13a) des poutres (13) est rempli de gaz ou de matériau (17) de faible densité.

4. Remorque selon la revendication 1, caractérisée en ce que le couvercle (4) est articulé au bord arrière supérieur de la caisse (3) par une charnière (6) permettant son pivotement par rapport à celle-ci sur environ 180 degrés, les faces arrière du couvercle (4) et de la caisse (3) ayant un profil complémentaire permettant leur venue à proximité l'une de l'autre et des moyens (10 à 16) étant prévus pour fixer le couvercle (4) et la caisse (3) en alignement l'un par rapport à l'autre.

5. Remorque selon la revendication 2, caractérisée en ce qu'elle comprend au moins l'un des moyens de fixation du couvercle (4) en alignement de la caisse (3) suivants :
- au moins une attache rapide (10) du type "à genouillère" ;
- un banc transversal (11) dont les montants (12) comprennent une fente leur permettant d'être engagés à cheval sur les parois arrière de la caisse (3) et du couvercle (4).

6. Remorque selon l'une des revendications 1 à 5, caractérisée en ce que le couvercle (4) peut être désassemblé de la caisse (3), le couvercle (4) étant prévu de manière à pouvoir être adapté sur une galerie d'automobile, sur des barres ou sur un bac fixés sur son toit, et les logements (15) pour recevoir des objets longilignes tels que des skis, cannes à pêche ou autres.

7. Remorque selon la revendication 6, caractérisée en ce que les logements (15) peuvent être ouverts de manière à ce que les objets longilignes précités puissent dépasser du couvercle (4).

8. Remorque selon l'une des revendications 1 à 7, caractérisée en ce que son timon d'attelage (2) a une forme générale en U dont la partie centrale (2a), qui porte le crochet d'attelage, et dont les branches (2b), qui sont fixées à la caisse (3), délimitent entre elles ainsi qu'avec la face avant de la caisse (3) une ouverture (22) dont les dimensions permettent le passage à travers elle de l'hélice et de l'arbre d'un moteur (20) dit "hors-bord" monté sur une chaise (19) que forme la paroi avant de la caisse (3).

9. Remorque selon l'une des revendications 1 à 8, caractérisée en ce que les branches (2b) de son timon d'attelage (2) sont fixées aux parois latérales de la caisse (3) et leurs extrémités libres sont recourbées à 180 degrés vers le bas, les parties recourbées étant décalées desdites parois vers l'extérieur et lesdites extrémités libres portant chacune au moins une platine (25) munie d'un axe (26) en saillie perpendiculaire vers l'extérieur autour duquel est monté un bras pivotant (27) portant l'une des roues (28) de la remorque (1), des moyens élastiques (32) étant prévus pour l'amortissement des mouvements du bras (27).

10. Remorque selon l'une des revendications 1 à 8, caractérisée en ce que la caisse (3) et le couvercle (4) ont un double fond, rempli de matière (36) à faible densité et plus volumineux à l'arrière de l'embarcation (8) qu'à l'avant.

## Claims

1. A towable luggage trailer, of the type having a container and a cover shaped to enable them to be assembled to form an extension of one another by means of sliding longitudinal elements in order to constitute the hull of a boat (8), characterised in that these elements are constituted by at least one longitudinal beam (13) constituted by at least two telescopic elements (13a,13b), of which the external one (13a) is fixed on the exterior face of a wall, either of the container (3), or of the cover (4), and of which at least one of the internal elements (13b) is intended, when it is moved, to be engaged in a housing (15) adjusted to its dimensions and provided, respectively, either in the cover (4) or in the container (3).

2. A trailer according to Claim 1, characterised in that it includes two lateral beams (13) of which the external elements (13a) are fixed to returns (14) formed by the upper lateral edges of the container (3) and of which the internal sliding elements (13b) are intended to be engaged in channels (15) delimited by similar returns (16) formed by the opening lateral edges of the cover (4).

3. A trailer according to Claim 1, characterised in that the internal element (13a) of the beams (13) is filled with gas or a low density material (17).

4. A trailer according to Claim 1, characterised in that the cover (4) is pivoted on the upper rear edge of the container (3) by a hinge (6) which allows it to pivot through about 180 degrees with respect to the latter, the rear faces of the cover (4) and of the container (3) having complementary profiles allowing them to come closely together, and means (10 to 16) being provided to fix the cover (4) and the container (3) in alignment with each other.

5. A trailer according to Claim 2, characterised in that it includes at least one of the following means for fixing the cover (4) in alignment with the container (3):
- at least one rapid fastener (10) of the "toggle" type;
- a transverse bench (11) of which the uprights (12) include a slot which allows them to be engaged astride the rear walls of the container (3) and of the cover (4).

6. A trailer according to one of Claims 1 to 5, characterised in that the cover (4) may be dismounted from the container (3), the cover (4) being provided in such a way as to be able to be fitted onto a car roof rack, on rails or on a box fixed on its roof, and housings (15) to receive lengthy objects such as skis, fishing rods or the like.

7. A trailer according to Claim 6, characterised in that the housings (15) may be open such that the aforementioned lengthy objects may extend beyond the cover (4).

8. A trailer according to one of Claims 1 to 7, characterised in that its towing bar (2) has the general form of a U, of which the central portion (2a), which carries the towing hook, and the arms (2b), which are fixed to the container (3), delimit between them, together with the front face of the container (3), an opening (22) of which the dimensions allow the passage therethrough of the propeller and shaft of a motor (20), known as an "outboard", mounted on a support (19) formed by the front wall of the container (3).

9. A trailer according to one of Claims 1 to 8, characterised in that the arms (2b) of its towing bar (2) are fixed to the side walls of the container (3) and their free ends are bent downwards at 180 degrees, the bent portions being outwardly offset from the walls and the free ends each carrying at least one plate (25) provided with a shaft (26) projecting perpendicularly outwardly about which is mounted a pivotal arm (27) carrying one of the wheels (28) of the trailer (1), resilient means (32) being provided for damping the movements of the arm (27).

10. A trailer according to one of Claims 1 to 8, characterised in that the container (3) and the cover (4) have a double base, filled with low density material (36) and larger at the rear of the boat (8) than at the front.

## Patentansprüche

1. Ankuppelbarer Gepäckanhänger des Typs umfassend einen Kasten und einen Deckel, die derart ausgebildet sind, daß sie in der Verlängerung des jeweils anderen mittels Längsgleitelementen zusammengefügt werden können, um die Schale eines Bootes (8) zu bilden, **dadurch gekennzeichnet**, daß diese Elemente von wenigstens einem Längsträger (13) gebildet sind, der von wenigstens zwei Telekop-Elementen (13a, 13b) gebildet ist, von welchen das äußere (13a) an der Außenseite einer Wandung des Kastens (3) oder des Deckels (4) befestigt ist und von welchen wenigstens eines der inneren (13b) dazu bestimmt ist, bei seiner Verlagerung mit einer seinen Abmessungen angepaßten Aufnahme (15) in Eingriff gebracht zu werden, welche in dem Deckel (4) bzw. dem Kasten (3) vorgesehen ist.

2. Anhänger nach Anspruch 1, **dadurch gekennzeichnet**, daß er zwei seitliche Träger (13) umfaßt, deren Außenelemente (13a) an Umstülpungen (14) befestigt sind, welche die oberen Seitenränder des Kastens (3) bilden, und deren innere Gleitelemente (13b) dazu bestimmt sind, in Rinnen (15) einzugreifen, die von ähnlichen Umstülpungen (16) begrenzt sind, welche die Seitenränder der Öffnung des Deckels (4) bilden.

3. Anhänger nach Anspruch 1, **dadurch gekennzeichnet**, daß das innere Element (13a) der Träger (13) mit Gas oder einem Material (17) geringer Dichte gefüllt ist.

4. Anhänger nach Anspruch 1, **dadurch gekennzeichnet**, daß der Deckel (4) am oberen hinteren Rand des Kastens (3) über ein Scharnier (6) angelenkt ist, welches es erlaubt, den Deckel (4) relativ zu diesem über etwa 180 Grad zu verschwenken, wobei die hinteren Flächen des Deckels (4) und des Kastens (3) ein komplementäres Profil aufweisen, welches ihre Nebeneinanderanordnung erlaubt, sowie Mittel (10 bis 16), welche vorgesehen sind, um den Deckel (4) und den Kasten (3) aneinander und zueinander ausgerichtet zu befestigen.

5. Anhänger nach Anspruch 2, **dadurch gekennzeichnet**, daß er wenigstens eines der folgenden Befestigungsmittel des Deckels (4) in Ausrichtung zum Kasten (3) umfaßt:
- wenigstens eine Schnellverbindung (10) des "Kniehebel"-Typs;
- eine Querbank (11), deren Stützen (12) einen Schlitz umfassen, der es ihnen erlaubt, rittlings auf den hinteren Wandungen des Kastens (3) und des Deckels (4) in Eingriff gebracht zu werden.

6. Anhänger nach einem der Ansprüche 1 bis 5, **dadurch gekennzeichnet**, daß der Deckel (4) von dem Kasten (3) abgenommen werden kann, wobei der Deckel (4) derart vorgesehen ist, daß er auf einem Kraftfahrzeuggepäckträger, auf Stangen oder einer Ladefläche angebracht werden kann, die auf dessen Dach befestigt sind, und die Aufnahmen (15) zur Aufnahme schlanker Gegenstände wie Skiern, Angelruten oder dergleichen vorgesehen sind.

7. Anhänger nach Anspruch 6, **dadurch gekennzeichnet**, daß die Aufnahmen (15) offen sein können, derart, daß die vorgenannten schlanken Gegenstände aus dem Deckel (4) vorstehen können.

8. Anhänger nach einem der Ansprüche 1 bis 7, **dadurch gekennzeichnet**, daß seine Kuppeldeichsel (2) eine allgemein U-förmige Gestalt aufweist, deren mittlerer Teil (2a), der den Kupplungshaken trägt, und deren Schenkel (2b), die am Kasten (3) befestigt sind, zwischen sich sowie mit der vorderen Fläche des Kastens (3) eine Öffnung (22) festlegen, deren Abmessungen den Durchtritt der Schraube und der Welle eines "Außenborder" genannten Motors (20) erlauben, der auf einem Gestell (19) angebracht ist, das die vordere Wandung des Kastens (3) bildet.

9. Anhänger nach einem der Ansprüche 1 bis 8, **dadurch gekennzeichnet**, daß die Schenkel (2b) seiner Kuppeldeichsel (2) an den Seitenwandungen des Kastens (3) befestigt sind und ihre freien Enden um 180 Grad nach unten umgebogen sind, wobei die umgebogenen Abschnitte von den genannten Wandungen nach außen versetzt sind und die genannten freien Enden jeweils wenigstens eine Platte (25) tragen, die mit einer nach außen orthogonal vorspringenden Achse (26) versehen ist, um welche herum ein Schwenkarm (27) angebracht ist, der eines der Räder (28) des Anhängers (1) trägt, wobei elastische Mittel (32) vorgesehen sind, zur Dämpfung der Bewegungen des Arms (27).

10. Anhänger nach einem der Ansprüche 1 bis 8, **dadurch gekennzeichnet**, daß der Kasten (3) und der Deckel (4) einen doppelten Boden aufweisen, der mit einem Material (36) geringer Dichte gefüllt ist und der am Heck des Bootes (8) voluminöser ist als an dessen Bug.
